# EUROPÄISCHE PATENTSCHRIFT

(11) **EP 2 811 599 B1**
(45) Veröffentlichungstag und Bekanntmachung des Hinweises auf die Patenterteilung: **30.05.2018**
(21) Anmeldenummer: 14163119.2
(22) Anmeldetag: 02.04.2014
(51) Int. Cl.: H02G 3/18, H02G 3/14

(54) **ELEKTRISCHES/ELEKTRONISCHES INSTALLATIONSGERÄT**
ELECTRIC/ELECTRONIC INSTALLATION DEVICE
APPAREIL D'INSTALLATION ÉLECTRIQUE/ÉLECTRONIQUE

(30) Priorität: 07.06.2013 DE 102013105894
(43) Veröffentlichungstag der Anmeldung: 10.12.2014
(73) Patentinhaber: Berker GmbH & Co. KG, 58579 Schalksmühle (DE)
(72) Erfinder: Figge, Hans-Joachim, 58339 Breckerfeld (DE)
(74) Vertreter: Nuss, Laurent

(56) Entgegenhaltungen:
- EP-A2- 1 993 180
- DE-C1- 10 233 331
- DE-U1- 9 406 434
- DE-U1-202008 015 052

## Beschreibung

Die vorliegende Erfindung geht von einem gemäß Oberbegriff des Hauptanspruches konzipierten elektrischen/elektronischen Installationsgerät aus.

Derartige elektrische/elektronische Installationsgeräte sind oftmals als Schaltgeräte ausgeführt und in der Regel dafür vorgesehen, die Ein- und Ausschaltung eines Stromkreises bzw. die Umschaltung von einem auf einen anderen Stromkreis zu bewirken. Außerdem sind solche elektrischen/elektronischen Installationsgeräte oftmals auch als sogenannte Türkommunikationsgeräte ausgeführt und zur Bedienung der Klingel bzw. Türsprechanlage eines Gebäudes vorgesehen. Bei solchen elektrischen/elektronischen Installationsgeräten können die unterschiedlichsten Kontaktsysteme bzw. elektrischen Schaltelemente Verwendung finden. Die Betätigung solcher elektrischer/elektronischer Installationsgeräte kann z. B. durch das Verstellen eines z. B. als Taste, Wippe usw. ausgebildeten Betätigungsgliedes von einer Ausgangsposition in eine oder mehrere Funktionsstellungen erfolgen, wobei die Funktionsstellungen z. B. tastend ausgeführt sein können. Oftmals sind solche elektrischen/elektronischen Installationsgeräte mit Beleuchtungseinrichtungen ausgerüstet, damit z. B. eine Funktionsanzeige und/oder eine Suchbeleuchtung ggf. unter Zuhilfenahme von Lichtleitelementen realisiert werden kann.

Ein dem Oberbegriff des Hauptanspruches entsprechendes elektrisches/elektronisches Installationsgerät ist durch die DE 94 06 434 U1 bekannt geworden. Ein weiteres elektrisches/elektronisches Installationsgerät ist aus der DE 20 2008 015 052 U1 bekannt. Dieses als Schaltgerät ausgebildete elektrische/elektronische Installationsgerät besteht im Wesentlichen aus einem die zur Funktion notwendigen elektrischen/elektronischen Bauteile aufnehmenden Grundmodul, dem ein zumindest ein verstellbares Betätigungsglied aufweisendes Betätigungsmodul zugeordnet ist. Das Grundmodul weist eine mit mehreren elektrischen Schaltelementen bestückte elektrische Leiterplatte auf, wobei die elektrischen Schaltelemente dem zumindest einen Betätigungsglied zugeordnet sind und wobei dem Grundmodul ein rückseitig an einer Installationswand zur Anlage kommender Designrahmen zugeordnet ist. Ein solchermaßen ausgebildetes elektrisches/elektronisches Installationsgerät stellt mit seinem Sockelteil und mehreren Grundkörpern eine bauliche Einheit dar. Weil eine bauliche Einheit vorliegt, ist ein solches elektrisches/elektronisches Installationsgerät hinsichtlich der verwendeten Anzahl von Betätigungsgliedern lediglich auf einen einzigen Bedarfsfall abgestellt.

Der vorliegenden Erfindung liegt deshalb die Aufgabe zugrunde ein elektrisches/elektronisches Installationsgerät zu schaffen, welches hinsichtlich der verwendeten Anzahl von Betätigungsgliedern auf einfache Art und Weise auf unterschiedliche Bedarfsfälle abgestellt werden kann. Insbesondere soll es möglich sein, bei ein und demselben Grundmodul wahlweise die Verwendung von einem einzigen, zwei oder vier Betätigungsgliedern zu ermöglichen.

Diese Aufgabe wird durch die im kennzeichnenden Teil des Hauptanspruches angegebenen Merkmale gelöst.

Bei einem solchermaßen ausgebildeten elektrischen/elektronischen Installationsgerät ist besonders vorteilhaft, dass eine Aufteilung in zwei Funktionsbaugruppen vorgenommen wurde. Dabei handelt es sich bei der ersten Funktionsbaugruppe um das Grundmodul, welches spritzwassergeschützt und staubdicht alle zur Funktion notwendigen elektrischen/elektronischen Bauteile aufnimmt. Bei der zweiten Funktionsbaugruppe handelt es sich um das Betätigungsmodul, welches ein oder mehrere Betätigungsglieder aufweist. Jede der beiden Funktionsgruppen ist auf einfache Art und Weise für sich separat händelbar.

Weitere vorteilhafte Ausgestaltungen sind in den Unteransprüchen angegeben. Anhand eines in den Zeichnungen dargestellten Ausführungsbeispiels ist der erfindungsgemäße Gegenstand näher erläutert. Dabei zeigen:
- Fig. 1:: prinziphaft eine Explosionsdarstellung des elektrischen/elektronischen Installationsgerätes, in räumlicher Darstellung;
- Fig. 2:: prinziphaft einen Vollschnitt des in Fig. 1 dargestellten elektrischen/elektronischen Installationsgerätes;
- Fig. 3:: prinziphaft das Betätigungsmodul, dargestellt in drei verschiedenen Varianten, räumlich in Draufsicht;
- Fig. 4:: prinziphaft losgelöst ein Betätigungsglied eines solchen elektrischen/elektronischen Installationsgerätes räumlich, im Schnitt.

Wie aus den Figuren hervorgeht, besteht ein solches elektrisches/elektronisches Installationsgerät im Wesentlichen aus einem die zur Funktion notwendigen elektrischen/elektronischen Bauteile aufnehmenden Grundmodul 1, dem ein zumindest ein verstellbares Betätigungsglied 2 aufweisendes Betätigungsmodul 3 zugeordnet ist. Das Grundmodul 1 weist eine mit mehreren elektrischen Schaltelementen 4 bestückte elektrische Leiterplatte 5 auf, wobei zumindest ein elektrisches Schaltelemente 4 zumindest einem Betätigungsglied 2 des am Grundmodul 1 gehaltenen Betätigungsmoduls 3 zugeordnet ist. Am Grundmodul 1 ist ein rückseitig an einer Installationswand zur Anlage kommender Designrahmen 6 befestigbar.

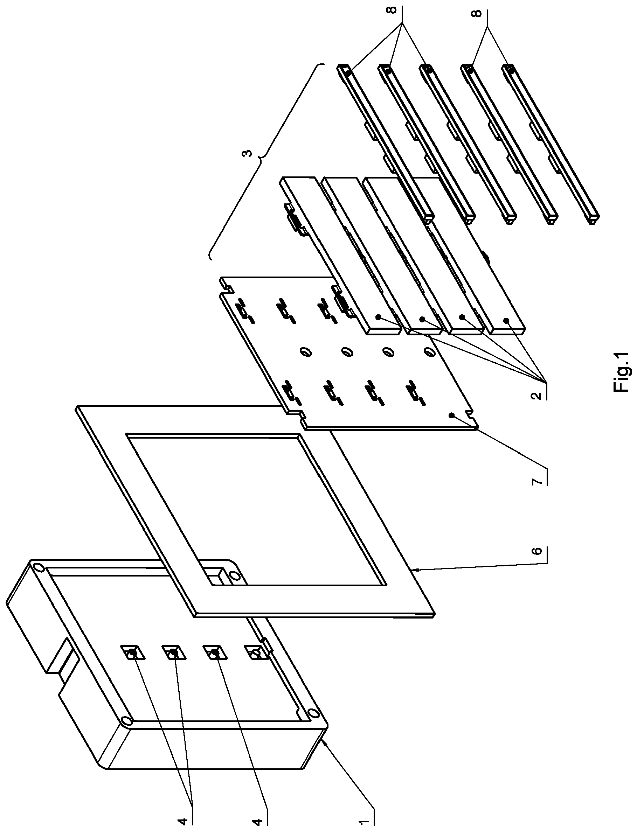

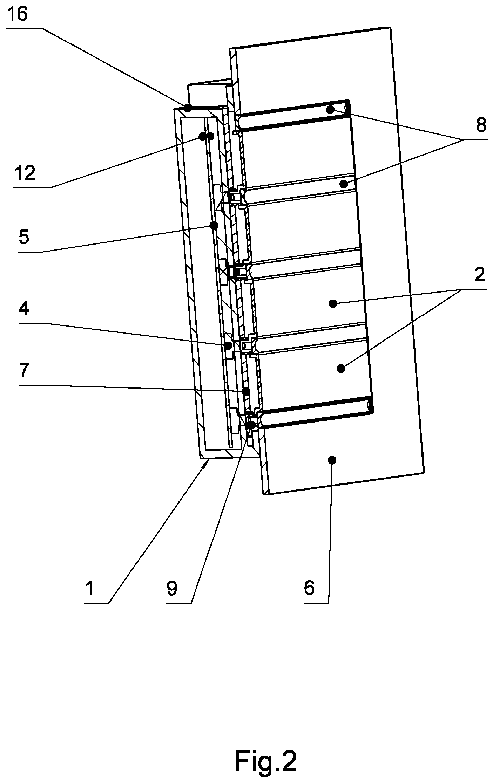

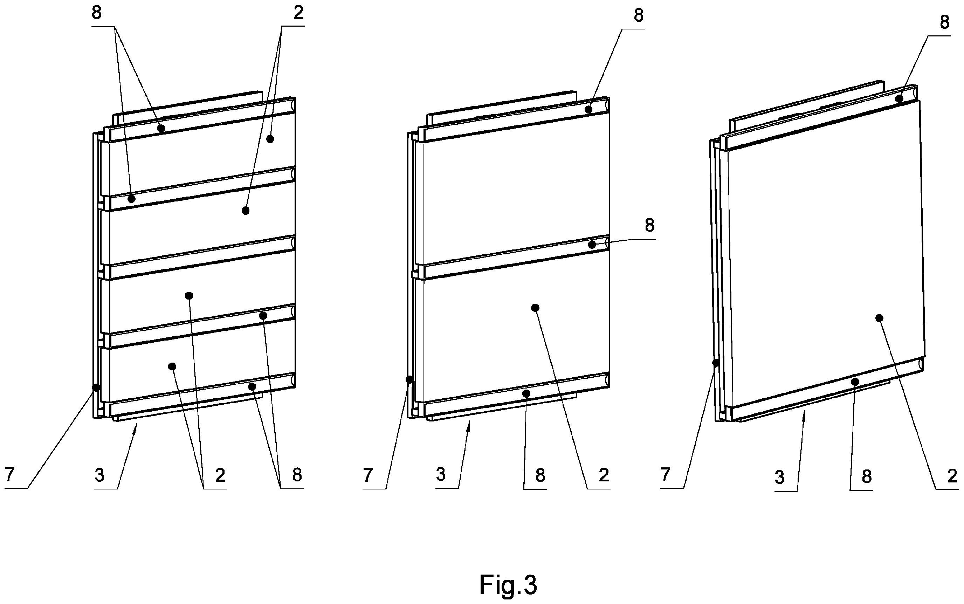

Wie des Weiteren aus den Figuren hervorgeht, besteht jede der drei dargestellten Varianten des Betätigungsmoduls 3 aus einer haltend mit dem Grundmodul 1 verbindbaren Funktionsplatte 7, an dem je nach Variante gemäß Fig. 3 ein Betätigungsglied 2, zwei Betätigungsglieder 2 oder vier Betätigungsglieder 2 verstellbar gehalten sind. In dem in Figur 1 und Figur 2 dargestellten Ausführungsbeispiel sind an der Funktionsplatte 7 vier Betätigungsglieder 2 verstellbar gehalten. Das Betätigungsmodul 3 weist also vier Betätigungsglieder 2 auf. Um eine optische Trennung zu erwirken, sind zwischen den vier Betätigungsgliedern 2 drei zierleistenartig ausgeführte Blenden 8 angeordnet. Um die Montage- bzw. Demontagemöglichkeit des Betätigungsmoduls 3 einerseits zu ermöglichen und andererseits zu verhindern, sind der Oberseite des oberen Betätigungsgliedes 2 und der Unterseite des unteren Betätigungsgliedes 2 jeweils eine, ebenfalls zierleistenartig ausgeführte Blende 8 zugeordnet. Die beiden äußeren Blenden 8 dienen also dazu, die Montage- bzw. die Demontagemöglichkeit des Betätigungsmoduls 3 zu ermöglichen oder zu unterbinden und dieses formschön abzuschließen. Die drei mittleren Blenden 8 dienen der formschönen optischen Trennung der vier Betätigungsglieder 2. Die zierleistenartigen Blenden 8 sind jeweils über eine Verclipsung an der Funktionsplatte 7 festgelegt. Das Grundmodul 1 mit oder ohne Designrahmen 6 und das Betätigungsmodul 3 in seinen unterschiedlichen Varianten (siehe insbesondere Figur 3) stellt jeweils eine auf einfache Art und Weise separat händelbare Funktionsbaugruppe dar. Je nach Bedarf kann das Grundmodul 1 vom Benutzer auf einfache Art und Weise mit einem, den jeweiligen Bedarfsfall abdeckenden Betätigungsmodul 3 bestückt werden. Weil die elektrische Leiterplatte 5 im vorliegenden Fall immer mit vier Schaltelementen 4 (Maximalbestückung) bestückt ist, lässt sich durch den Benutzer auch im Nachhinein auf einfache Art und Weise eine Anpassung auf den dann (nämlich zu einem späteren Zeitpunkt) vorliegenden Bedarfsfall vornehmen. Der Benutzer muss dazu nur das Betätigungsmodul 3 austauschen. Der Benutzer kann zum Beispiel ein Betätigungsmodul 3 mit vier Betätigungsgliedern 2 durch ein Betätigungsmodul 3 mit zwei Betätigungsgliedern 2 ersetzen. Vorteilhafterweise kann das Grundmodul 1 bei einer solchen Anpassung unangetastet in seiner Montageposition verbleiben. In Figur 1 und Figur 2 kommt lediglich beispielsweise ein Betätigungsmodul 3 mit vier Betätigungsgliedern 2 zum Einsatz.

Wie des Weiteren insbesondere aus Figur 3 hervorgeht, besteht ein erstes Betätigungsmodul 3 aus einer Funktionsplatte 7, vier Betätigungsgliedern 2 und fünf Blenden 8. Ein zweites Betätigungsmodul 3 besteht aus einer Funktionsplatte 7, zwei Betätigungsgliedern 2 und drei Blenden 8. Das dritte Betätigungsmodul 3 besteht aus einer Funktionsplatte 7, einem Betätigungsglied 2 und zwei Blenden 8.

Wie des Weiteren insbesondere aus Figur 2 hervorgeht, ist das Grundmodul 1 spritzwassergeschützt und staubdicht ausgeführt und nimmt in seinem Innenraum die zur Funktion notwendigen elektrischen/elektronischen Bauteile auf. Auch die elektrische Leiterplatte 5 ist im Innenraum des Grundmoduls 1 geschützt untergebracht, wobei nur die Schaltstößel der vier Schaltelemente 4 aus dem Gehäuse des Grundmoduls 1 herausragen. Die Leiterplatte 5 des Grundmoduls 1 ist - wie bereits vorstehend beschrieben - immer mit vier Schaltelementen 4 bestückt. Somit liegt für zwei der drei Varianten des Betätigungsmoduls 3 eine Überbestückung mit Schaltelementen 4 vor. Diese Überbestückung mit Schaltelementen 4 wird jedoch bewusst in Kauf genommen, damit das Grundmodul 1, ohne dieses demontieren zu müssen, auf einfache Art und Weise je nach Bedarf mit einer bedarfsgerechten Variante des Betätigungsmoduls 3 bestückt werden kann. Die Betätigungsglieder 2 jedes Betätigungsmoduls 3 sind jeweils über zwei angeformte Befestigungslaschen 13 wippenartig an der Funktionsplatte 7 gehalten. Dabei kommen an die Befestigungslaschen 13 angeformte Rasthaken 14 mit in der Führungsplatte 7 vorhandenen Halteöffnungen 15 in Wirkverbindung. An jedes Betätigungsglied 2 ist zudem ein Betätigungsnocken 9 angeformt, der mit dem zugehörigen elektrischen Schaltelement 4 zusammenwirkt. Beim vorliegenden Ausführungsbeispiel sind die vier auf der elektrischen Leiterplatte 5 angeordneten Schaltelemente 4 jeweils als Mikrotaster ausgeführt. Zur Hinterleuchtung der Betätigungsglieder 2 des Betätigungsmoduls 3 sind auf der elektrischen Leiterplatte 5 zudem sieben LED-Bausteine 12 angeordnet, welche zu einer der Einfachheit halber nicht weiter näher dargestellten, Beleuchtungseinrichtung gehören

Weiterhin ist besonders vorteilhaft, dass das Betätigungsmodul 3 über seine Funktionsplatte 7 gegen Federwirkung verrastet am Grundmodul 1 festlegbar ist. Zu diesem Zweck ist am Grundmodul 1 ein Federelement 16 angeordnet. Um die Montage bzw. Demontage des Betätigungsmoduls 3 am Grundmodul 1 zu ermöglichen, muss zunächst die obere und die untere Blende 8 vom zugehörigen Betätigungsglied 2 bzw. von den beiden zugehörigen Betätigungsgliedern 2 entfernt werden. Bei der Demontage entstehen durch das Entfernen der beiden Blenden 8 Zwischenräume, die zum Verschieben des Betätigungsmoduls 3 gegen die Federwirkung des Federelementes 15 ausgenutzt werden können. Letztendlich kann dann das Betätigungsmodul 3 aus der Festlegung mit dem Grundmodul 1 herausgelöst und abgenommen werden. Bei der Montage wird das Betätigungsmodul 3 ohne die beiden äußeren Blenden 8 in das Grundmodul 1 eingesetzt und gegen die Federwirkung des Federelementes 15 am Grundmodul 1 verrastet. Zum Schluss werden die beiden äußeren Blenden 8 eingesetzt und somit die ansonsten vorhandenen Zwischenräume formschön geschlossen.

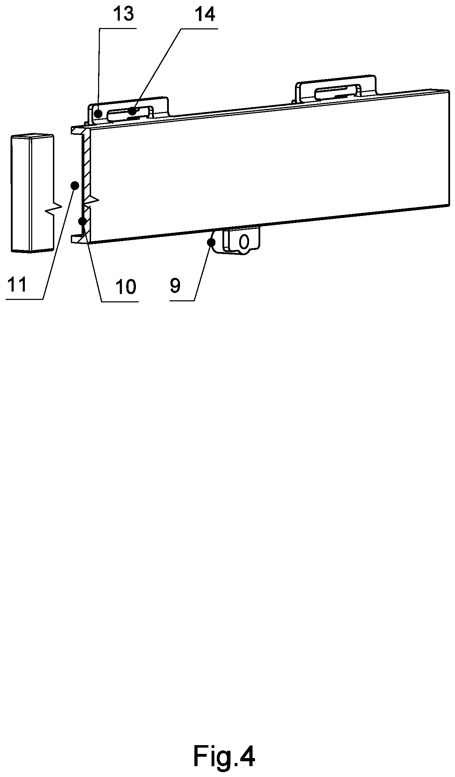

Wie insbesondere aus Figur 4 hervorgeht, weist jedes Betätigungsglied 2 zwei Befestigungslaschen 13 auf, die bügelartig ausgestaltet sind. Einstückig ist an jede Befestigungslasche 13 ein Rasthaken 14 angeformt. Außerdem ist an jedes Betätigungsglied 2 ein Betätigungsnocken 9 angeformt, welcher mit dem zugehörigen Schaltelement 4 zusammenwirkt. Jedes Betätigungsglied 2 ist zudem mit einem Kennzeichnungsschild 10 versehen, welches in eine Aufnahmetasche 11 eingelegt ist. Zur Wahrnehmung der auf dem Kennzeichnungsschild 10 vorhandenen Information ist jedes Betätigungsglied 2 zumindest teilweise transparent ausgeführt.

### Bezugszeichenliste

- 1: Grundmodul
- 2: Betätigungsglied
- 3: Betätigungsmodul
- 4: Schaltelement
- 5: Leiterplatte
- 6: Designrahmen
- 7: Funktionsplatte
- 8: Blende
- 9: Betätigungsnocken
- 10: Kennzeichnungsschild
- 11: Aufnahmetasche
- 12: LED-Baustein
- 13: Befestigungslaschen
- 14: Rasthaken
- 15: Halteöffnungen
- 16: Federelement

## Patentansprüche

1. Elektrisches/elektronisches Installationsgerät der Gebäudesystemtechnik mit einem die zur Funktion notwendigen elektrischen/elektronischen Bauteile aufnehmenden Grundmodul, dem ein zumindest ein verstellbares Betätigungsglied aufweisendes Betätigungsmodul zugeordnet ist, wobei das Grundmodul eine mit mehreren elektrischen Schaltelementen bestückte elektrische Leiterplatte aufweist, wobei die elektrischen Schaltelemente dem zumindest einen Betätigungsglied zugeordnet sind und wobei dem Grundmodul ein rückseitig an einer Installationswand zur Anlage kommender Designrahmen zugeordnet ist, wobei das Betätigungsmodul (3) aus einer haltend mit dem Grundmodul (1) verbindbaren Funktionsplatte (7), zumindest einem verstellbar an der Funktionsplatte (7) gehaltenen, mit einem der elektrischen Schaltelemente (4) zusammenwirkenden Betätigungsglied (2) und zumindest zwei Blenden (8) besteht, **dadurch gekennzeichnet, dass** die Blenden (8) über eine Verclipsung an der Funktionsplatte (7) festgelegt sind und zumindest eine Blende (8) zierleistenartig ausgeführt ist.

2. Elektrisches/elektronisches Installationsgerät nach Anspruch 1, **dadurch gekennzeichnet, dass** die elektrische Leiterplatte (5) mit zumindest vier elektrischen Schaltelementen (4) bestückt ist und dass das Betätigungsmodul (3) mit zumindest zwei verstellbaren Betätigungsgliedern (2) ausgerüstet ist.

3. Elektrisches/elektronisches Installationsgerät nach Anspruch 1, **dadurch gekennzeichnet, dass** die elektrische Leiterplatte (5) mit zumindest vier elektrischen Schaltelementen (4) bestückt ist und dass das Betätigungsmodul (3) mit zumindest vier verstellbaren Betätigungsgliedern (2) ausgerüstet ist.

4. Elektrisches/elektronisches Installationsgerät nach einem der Ansprüche 1 bis 3, **dadurch gekennzeichnet, dass** zumindest ein Betätigungsglied (2) wippenartig ausgeführt an der Funktionsplatte (7) gehalten ist.

5. Elektrisches/elektronisches Installationsgerät nach einem der Ansprüche 1 bis 4, **dadurch gekennzeichnet, dass** zumindest ein Betätigungsglied (2) tastenartig ausgeführt an der Funktionsplatte (7) gehalten ist.

6. Elektrisches/elektronisches Installationsgerät nach einem der Ansprüche 1 bis 5, **dadurch gekennzeichnet, dass** an zumindest einem Betätigungsglied (2) ein mit einem der elektrischen Schaltelemente (4) zusammenwirkender Betätigungsnocken (9) vorhanden ist.

7. Elektrisches/elektronisches Installationsgerät nach einem der Ansprüche 1 bis 6, **dadurch gekennzeichnet, dass** zumindest ein Betätigungsglied (2) mit einer zur Aufnahme eines Kennzeichnungsschildes (10) vorgesehene Aufnahmetasche (11) versehen ist.

8. Elektrisches/elektronisches Installationsgerät nach einem der Ansprüche 1 bis 7, **dadurch gekennzeichnet, dass** das Grundmodul (1) zur Hinterleuchtung zumindest eines Betätigungsgliedes (2) mit einer Beleuchtungseinrichtung versehen ist, die zumindest einen LED-Baustein (12) aufweist.

9. Elektrisches/elektronisches Installationsgerät nach einem der Ansprüche 1 bis 8, **dadurch gekennzeichnet, dass** zumindest zwischen zwei einander zugeordneten Betätigungsgliedern (2) eine Blende (8) angeordnet ist.

10. Elektrisches/elektronisches Installationsgerät nach einem der Ansprüche 1 bis 9, **dadurch gekennzeichnet, dass** zumindest ein elektrisches Schaltelement (4) als Mikrotaster ausgeführt ist.

11. Elektrisches/elektronisches Installationsgerät nach einem der Ansprüche 1 bis 10, **dadurch gekennzeichnet, dass** zumindest ein elektrisches Schaltelement (4) als Domschaltkontakt ausgeführt ist.

12. Elektrisches/elektronisches Installationsgerät nach einem der Ansprüche 1 bis 11, **dadurch gekennzeichnet, dass** der Designrahmen (6) frontseitig am Grundmodul (1) befestigbar ist.

13. Elektrisches/elektronisches Installationsgerät nach einem der Ansprüche 1 bis 12, **dadurch gekennzeichnet, dass** das Betätigungsmodul (3) über seine Funktionsplatte (7) gegen Federwirkung verrastet am Grundmodul (1) festlegbar ist.

## Claims

1. Electric/electronic installation device for building automation systems comprising a base module for mounting the electric/electronic components necessary for functioning, to which base module an activating module comprising at least one adjustable actuating element is assigned, wherein the base module comprises an electric circuit board fitted with a plurality of electric switching elements, wherein the electric switching elements are assigned to the at least one actuating element and wherein a design frame fitting at the rear on an installation wall is assigned to the base module, wherein the actuating module (3) consists of a function plate (7) connectable to the base module (1), at least one actuating element (2) held adjustably on the function plate (7) and interacting with the electric switching elements (4) and at least two strips (8), **characterised in that** the strips (8) are secured by clipping onto the function plate (7) and at least one strip (8) is designed to be decorative.

2. Electric/electronic installation device according to claim 1, **characterised in that** the electric circuit board (5) is fitted with at least four electric switching elements (4) and **in that** the actuating module (3) is equipped with at least two adjustable actuating elements (2).

3. Electric/electronic installation device according to claim 1, **characterised in that** the electric circuit board (5) is fitted with at least four electric switching elements (4) and **in that** the actuating module (3) is equipped with at least four adjustable actuating elements (2).

4. Electric/electronic installation device according to any of claims 1 to 3, **characterised in that** at least one actuating element (2) designed as a rocker is held on the function plate (7).

5. Electric/electronic installation device according to any of claims 1 to 4, **characterised in that** at least one actuating element (2) designed as a button is held on the function plate (7).

6. Electric/electronic installation device according to any of claims 1 to 5, **characterised in that** on at least one actuating element (2) an actuating cam (9) cooperating with one of the electric switching elements (4) is provided.

7. Electric/electronic installation device according to any of claims 1 to 6, **characterised in that** at least one actuating element (2) is provided with a mounting pocket (11) provided for mounting a marking plate (10).

8. Electric/electronic installation device according to any of claims 1 to 7, **characterised in that** for backlighting at least one actuating element (2) the base module (1) is provided with a lighting device which comprises at least one LED component (12).

9. Electric/electronic installation device according to any of claims 1 to 8, **characterised in that** at least one strip (8) is arranged between two mutually assigned actuating elements (2).

10. Electric/electronic installation device according to any of claims 1 to 9, **characterised in that** at least one electric switching element (4) is designed as a micro button.

11. Electric/electronic installation device according to any of claims 1 to 10, **characterised in that** at least one electric switching element (4) is designed as a dome switching contact.

12. Electric/electronic installation device according to any of claims 1 to 11, **characterised in that** the design frame (6) can be attached to the front of the base module (1).

13. Electric/electronic installation device according to any of claims 1 to 12, **characterised in that** the actuating module (3) can be secured via its function plate (7) onto the base module (1) fixed against spring action.

## Revendications

1. Appareil d'installation électrique/électronique de la technique des systèmes du bâtiment, comprenant un module de base recevant les composants électriques/électroniques nécessaires au fonctionnement, auquel est associé un module d'actionnement présentant au moins un organe d'actionnement réglable, le module de base présentant une carte de circuit imprimé électrique équipée de plusieurs éléments de commutation électriques, les éléments de commutation électriques étant associés audit au moins un organe d'actionnement et un cadre design qui vient s'appliquer du côté arrière sur une paroi d'installation étant associé au module de base, le module d'actionnement (3) étant constitué d'une plaque de fonction (7) pouvant être reliée avec maintien au module de base (1), d'au moins un organe d'actionnement (2) maintenu de façon réglable sur la plaque de fonction (7), coopérant avec l'un des éléments de commutation électriques (4), et d'au moins deux caches (8), **caractérisé en ce que** les caches (8) sont fixés à la plaque de fonction (7) par clipsage et qu'au moins un cache (8) est réalisé à la manière d'une baguette décorative.

2. Appareil d'installation électrique/électronique selon la revendication 1, **caractérisé en ce que** la carte de circuit imprimé électrique (5) est équipée d'au moins quatre éléments de commutation électriques (4) et que le module d'actionnement (3) est équipé d'au moins deux organes d'actionnement réglables (2).

3. Appareil d'installation électrique/électronique selon la revendication 1, **caractérisé en ce que** la carte de circuit imprimé électrique (5) est équipée d'au moins quatre éléments de commutation électriques (4) et que le module d'actionnement (3) est équipé d'au moins quatre organes d'actionnement réglables (2).

4. Appareil d'installation électrique/électronique selon l'une des revendications 1 à 3, **caractérisé en ce qu'**au moins un organe d'actionnement (2) est réalisé à la manière d'une bascule et maintenu sur la plaque de fonction (7).

5. Appareil d'installation électrique/électronique selon l'une des revendications 1 à 4, **caractérisé en ce qu'**au moins un organe d'actionnement (2) est réalisé à la manière d'une touche et maintenu sur la plaque de fonction (7).

6. Appareil d'installation électrique/électronique selon l'une des revendications 1 à 5, **caractérisé en ce qu'**une came d'actionnement (9) coopérant avec l'un des éléments de commutation électriques (4) est présente sur au moins un organe d'actionnement (2).

7. Appareil d'installation électrique/électronique selon l'une des revendications 1 à 6, **caractérisé en ce qu'**au moins un organe d'actionnement (2) est pourvu d'un évidement de réception (11) prévu pour recevoir une étiquette (10).

8. Appareil d'installation électrique/électronique selon l'une des revendications 1 à 7, **caractérisé en ce que** le module de base (1) est pourvu d'un dispositif d'éclairage qui présente au moins un composant à LED (12), pour rétroéclairer au moins un organe d'actionnement (2).

9. Appareil d'installation électrique/électronique selon l'une des revendications 1 à 8, **caractérisé en ce qu'**un cache (8) est disposé au moins entre deux organes d'actionnement (2) associés l'un à l'autre.

10. Appareil d'installation électrique/électronique selon l'une des revendications 1 à 9, **caractérisé en ce qu'**au moins un élément de commutation électrique (4) est réalisé sous la forme d'un micro-bouton poussoir.

11. Appareil d'installation électrique/électronique selon l'une des revendications 1 à 10, **caractérisé en ce qu'**au moins un élément de commutation électrique (4) est réalisé sous la forme d'un contact de commutation à dôme.

12. Appareil d'installation électrique/électronique selon l'une des revendications 1 à 11, **caractérisé en ce que** le cadre design (6) peut être fixé du côté frontal sur le module de base (1).

13. Appareil d'installation électrique/électronique selon l'une des revendications 1 à 12, **caractérisé en ce que** le module d'actionnement (3) peut être fixé par sa plaque de fonction (7) sur le module de base (1) par encliquetage contre l'action d'un ressort.
